(19) **Europäisches Patentamt / European Patent Office / Office européen des brevets**

(11) **EP 4 249 640 B1**

(12) **FASCICULE DE BREVET EUROPEEN**

(45) Date de publication et mention de la délivrance du brevet:
**10.07.2024 Bulletin 2024/28**

(21) Numéro de dépôt: **23162019.6**

(22) Date de dépôt: **15.03.2023**

(51) Classification Internationale des Brevets (IPC):
**C25B 1/04** *(2021.01)* **C25B 9/00** *(2021.01)*
**C25B 9/21** *(2021.01)* **H01M 8/12** *(2016.01)*
**H01M 8/2432** *(2016.01)* **H01M 8/247** *(2016.01)*
**H01M 8/248** *(2016.01)* **H01M 8/249** *(2016.01)*
**C25B 1/042** *(2021.01)* **C25B 9/65** *(2021.01)*
**C25B 9/70** *(2021.01)*

(52) Classification Coopérative des Brevets (CPC):
**H01M 8/249; C25B 1/042; C25B 9/65; C25B 9/70;**
**H01M 8/12; H01M 8/2432; H01M 8/247;**
**H01M 8/248;** C25B 9/75; C25B 9/77;
H01M 2008/1293

(54) **SYSTÈME DE CONDITIONNEMENT D'UNE PLURALITÉ DE SOUS-EMPILEMENTS DE CELLULES À OXYDES SOLIDES DE TYPE SOEC/SOFC À HAUTE TEMPÉRATURE SUPERPOSÉS**

VERPACKUNGSSYSTEM VON MEHREREN GESTAPELTEN UNTERSTAPELN AUS HOCHTEMPERATUR-FESTOXIDZELLEN VOM TYP SOEC/SOFFC

SYSTEM FOR CONDITIONING A PLURALITY OF STACKED HIGH TEMPERATURE SOEC/SOFC-TYPE SOLID OXIDE CELL SUB-STACKS

(72) Inventeur: **DEVANCIARD, Nicolas**
**38054 GRENOBLE (FR)**

(74) Mandataire: **Brevalex**
**Tour Trinity**
**1 B Place de la Défense**
**92400 Courbevoie (FR)**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.03.2022 FR 2202538**

(43) Date de publication de la demande:
**27.09.2023 Bulletin 2023/39**

(73) Titulaire: **Commissariat à l'énergie atomique et aux énergies alternatives**
**75015 Paris (FR)**

(56) Documents cités:
**EP-A1- 3 955 353** **WO-A1-2005/053080**
**WO-A1-2018/122531** **FR-A1- 3 100 932**
**US-A1- 2011 091 786**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention se rapporte au domaine général de l'électrolyse à haute température (EHT), en particulier l'électrolyse de la vapeur d'eau à haute température (EVHT), désignée par les appellations anglaises « High Temperature Electrolysis » (HTE) et « High Temperature Steam Electrolysis » (HTSE), de l'électrolyse du dioxyde de carbone ($CO_2$), voire encore de la co-électrolyse de la vapeur d'eau et du dioxyde de carbone ($CO_2$) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements de cellules à oxydes solides de type SOEC/SOFC fonctionnant à haute température.

Plus précisément, l'invention concerne un système de conditionnement d'une pluralité de sous-empilements de cellules à oxydes solides de type SOEC/SOFC superposés fonctionnant à haute température, permettant le conditionnement simultané des sous-empilements.

### Technique antérieure

Dans le cadre d'un électrolyseur à oxydes solides à haute température de type SOEC, il s'agit de transformer par le biais d'un courant électrique, au sein d'un même dispositif électrochimique, la vapeur d'eau ($H_2O$) en dihydrogène ($H_2$) et en dioxygène ($O_2$), et/ou encore de transformer le dioxyde de carbone ($CO_2$) en monoxyde de carbone (CO) et en dioxygène ($O_2$). Dans le cadre d'une pile à combustible à oxydes solides à haute température de type SOFC, le fonctionnement est inverse pour produire un courant électrique et de la chaleur en étant alimentée en dihydrogène ($H_2$) ou d'autres combustibles tels que le méthane ($CH_4$), le gaz naturel, le biogaz, et en dioxygène (Oz), typiquement en air. Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone ($CO_2$), voire encore de la co-électrolyse de la vapeur d'eau à haute température (EHT) avec le dioxyde de carbone ($CO_2$). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en oeuvre l'électrolyse de la vapeur d'eau à haute température (EHT ou EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et vapeur d'eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le combustible, tandis que le compartiment cathodique comporte le comburant.

Pour réaliser l'électrolyse de la vapeur d'eau à haute température (EHT), on injecte de la vapeur d'eau ($H_2O$) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène ($H_2$) et des ions oxygène ($O^{2-}$). Le dihydrogène ($H_2$) est collecté et évacué en sortie de compartiment à hydrogène. Les ions oxygène ($O^{2-}$) migrent à travers l'électrolyte et se recombinent en dioxygène ($O_2$) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions $O^{2-}$. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène ($H_2$). Seule la polarité est inversée.

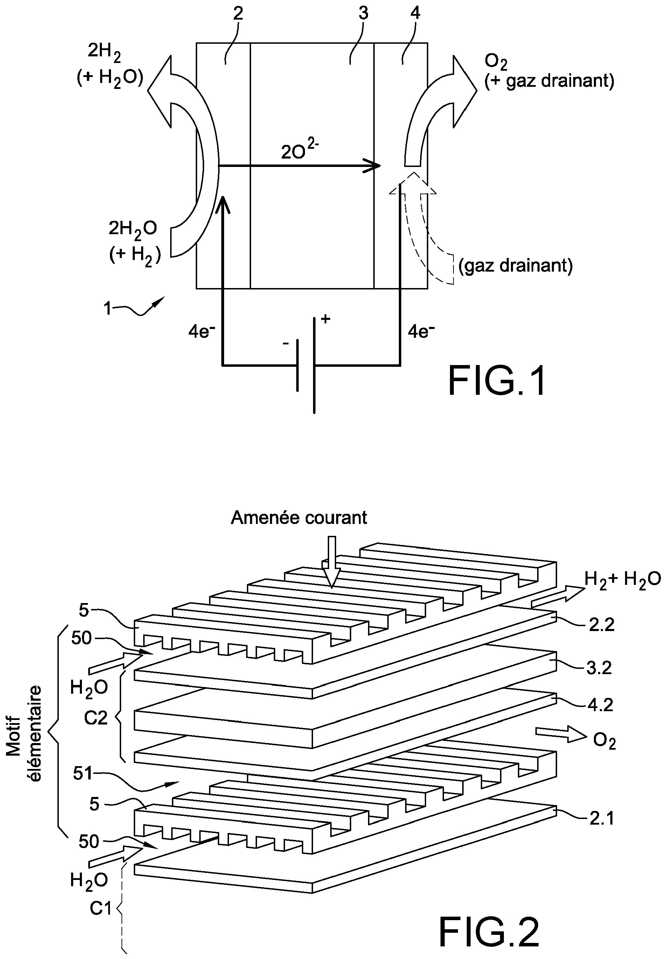

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

$$2\ H_2O \rightarrow 2\ H_2 + Oz.$$

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions $O^{2-}$ et l'électrolyseur est alors dénommé électrolyseur anionique, par opposition aux électrolytes protoniques ($H^+$).

Les réactions électrochimiques se font à l'interface entre chacun des conducteurs électroniques et le conducteur ionique.

A la cathode 2, la demi-réaction est la suivante :

$$2\ H_2O + 4\ e\ \text{-->}\ 2\ H_2 + 2\ O^{2-}.$$

A l'anode 4, la demi-réaction est la suivante:

$$2\ O^{2-} \rightarrow O_2 + 4\ e^-.$$

L'électrolyte 3, intercalé entre les deux électrodes 2 et 4, est le lieu de migration des ions $O^{2-}$ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène $H_2$ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements de cellules à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

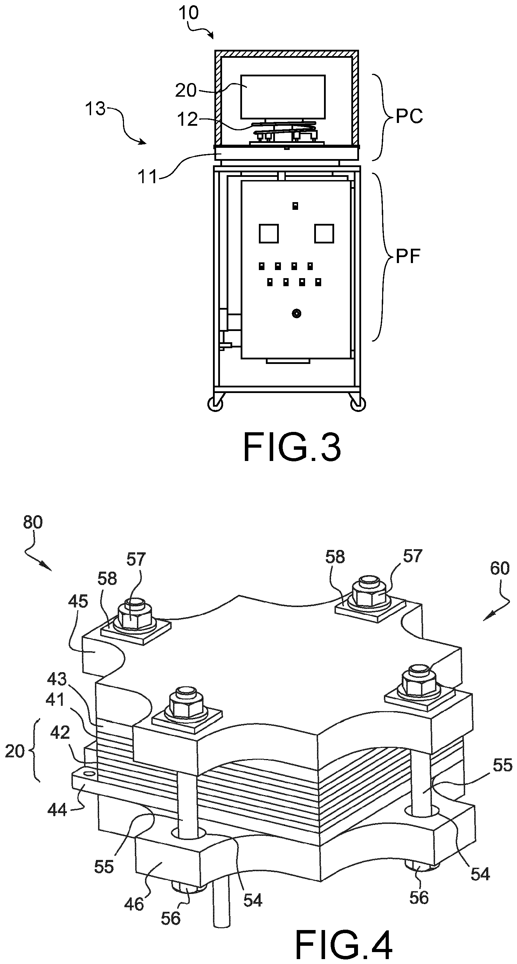

Les gaz entrants et sortants dans un empilement d'électrolyse à haute température (SOEC) ou de pile à combustible (SOFC) fonctionnant à haute température peuvent être gérés par le biais de dispositifs tel que celui illustré en référence à la figure 3. Le dispositif 13 comporte ainsi des parties froides PF et des parties chaudes PC, ces dernières comprenant la sole de four 11, la cloche du four 10, un tube en boucle 12 pour gérer les entrées et sorties de gaz et l'empilement 20, encore appelé « stack », d'électrolyse à haute température (SOEC) ou de pile à combustible (SOFC).

Par ailleurs, la figure 4 permet d'illustrer un exemple d'ensemble 80 comprenant un tel empilement 20 ou stack et un système de serrage 60 de celui-ci. Un tel ensemble 80 peut être tel que décrit dans la demande de brevet français FR 3 045 215 A1.

Ainsi, l'empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. De plus, il comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Le système de serrage 60 comporte une plaque de serrage supérieure 45 et une plaque de serrage inférieure 46, entre lesquelles l'empilement 20 est enserré. Chaque plaque de serrage 45, 46 comporte quatre orifices de serrage 54 au travers desquels s'étendent des tiges de serrage 55, ou tirants. Aux extrémités de celles-ci sont prévus des moyens de serrage 56, 57, 58.

En général, à ce jour, les empilements 20 ont un nombre limité de cellules électrochimiques 41. Typiquement, la Demanderesse met en oeuvre des empilements 20 d'un nombre de 25 cellules électrochimiques 41 de 100 cm$^2$ de surface active. L'étape de conditionnement se fait de manière unitaire, chaque stack étant placé seul dans un banc de conditionnement. Le cycle appliqué permet de réaliser à la fois l'étape d'obtention des étanchéités et l'étape de réduction des cellules électrochimiques 41. Le cycle se termine par différentes mesures électrochimiques permettant de caractériser la performance du stack, avant sa fourniture pour usage.

Avant son fonctionnement, il est nécessaire de faire subir à l'empilement 20 au moins une étape de traitement thermique dite de réduction, afin de mettre les cellules électrochimiques 41 sous leur forme réduite, et non pas oxydées comme elles le sont initialement. Cette étape de réduction peut être un cycle thermomécanique sous gaz réducteur pour l'électrode à hydrogène et air ou gaz neutre pour l'électrode à oxygène. Une telle étape de traitement thermique a par exemple été décrite dans la demande de brevet européen EP 2 870 650 A1.

Par ailleurs, les empilements 20 mis en oeuvre à ce jour utilisent en général, à chacun de leurs étages, des joints qui doivent garantir l'étanchéité entre deux compartiments de circulation des gaz, adjacents et distincts, i.e. un compartiment anodique et un compartiment cathodique. De tels joints ont été décrits dans la demande de brevet européen EP 3 078 071 A1. Ces joints ont la particularité de nécessiter un conditionnement thermique pendant lesquels ils s'écrasent.

De plus, les éléments de contacts, tels que les couches décrites dans la demande de brevet EP 2 900 846 A1 ou les grilles de Nickel, s'écrasent également lors du conditionnement thermique et lors du fonctionnement de l'empilement 20, ce qui garantit leur bonne mise en place. Les éléments qui servent d'éléments de contact dans la chambre hydrogène s'écrasent également.

Autrement dit, pendant l'étape de conditionnement thermique, un empilement 20 s'écrase de plusieurs centimètres. A ce jour, compte-tenu du relativement faible nombre de cellules empilées, l'écrasement se déroule correctement.

Toutefois, la Demanderesse a envisagé des réalisations d'empilements à plus grand nombre de cellules électrochimiques, typiquement au-delà de 25 cellules. Dans ce cas, le déplacement attendu lors du serrage de l'empilement peut conduire à des problèmes mécaniques de blocage de type arc-boutement sur les tiges de guidage. Ces blocages empêchent alors un bon conditionnement thermique, et par voie de conséquence un fonctionnement normal de l'empilement.

Une solution à ces inconvénients est de prévoir un concept d'empilement ou stack dans lequel plusieurs sous-empilements sont assemblés, par le biais de plaques de rigidification, de sorte à gérer les grands écrasements. Cependant, il faut alors conditionner chaque sous-empilement séparément et ainsi un nombre important d'empilements et de sous-empilements doit être réalisé.

Or, le conditionnement d'un tel empilement est une étape longue et coûteuse car le chauffage demande de l'énergie. De plus, les dispositifs actuels permettent de conditionner un seul empilement ou sous-empilement à la fois.

En conséquence, il existe encore un besoin pour améliorer le principe de conditionnement des empilements d'électrolyse à haute température (SOEC) ou de pile à combustible (SOFC), notamment pour conditionner plusieurs sous-empilements en même temps.

**Exposé de l'invention**

L'invention a pour but de remédier au moins partiellement aux besoins mentionnés précédemment et aux inconvénients relatifs aux réalisations de l'art antérieur.

L'invention a ainsi pour objet, selon l'un de ses aspects, un système de conditionnement d'une pluralité de sous-empilements de cellules à oxydes solides de type SOEC/SOFC fonctionnant à haute température formant ensemble un empilement modulaire de cellules à oxydes solides de type SOEC/SOFC haute température, chaque sous-empilement comportant une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,

caractérisé en ce que le système comporte :

- une enceinte thermique délimitant un volume interne,
- une pluralité de sous-empilements placés dans le volume interne, au moins deux sous-empilements étant superposés au moins partiellement l'un par rapport à l'autre, chaque sous-empilement présentant une face supérieure et une face inférieure,
- une pluralité de plaques terminales, chaque sous-empilement étant disposé entre une plaque terminale supérieure et une plaque terminale inférieure, chaque plaque terminale présentant une face supérieure et une face inférieure dont au moins une est au contact d'au moins un sous-empilement, la surface d'une face supérieure d'une plaque terminale étant de plus grande dimension que la surface d'une face inférieure d'un sous-empilement et la surface d'une face inférieure d'une plaque terminale étant de plus grande dimension que la surface d'une face supérieure d'un sous-empilement de sorte que chaque face supérieure et chaque face inférieure d'une plaque terminale au contact d'au moins un sous-empilement présente une ou plusieurs surfaces libres non superposées à un sous-empilement et sans contact avec un sous-empilement,
- une pluralité de supports formant matrice disposés sur la ou les surfaces libres des faces supérieures des plaques terminales au contact d'au moins un sous-empilement, chaque support formant matrice comportant un évidement débouchant sur une face supérieure du support formant matrice opposée à une surface libre,

- une pluralité d'éléments flexibles, chacun étant disposé au-dessus d'un évidement en appui sur le support formant matrice, de part et d'autre de l'évidement, et notamment positionné sur un lamage,
- une pluralité d'éléments d'appui, disposés sous la ou les surfaces libres des faces inférieures des plaques terminales au contact d'au moins un sous-empilement, chaque élément d'appui étant apte à venir au contact d'au moins un élément flexible lors du conditionnement des sous-empilements et à le déformer par pénétration dans au moins un évidement.

Le système de conditionnement selon l'invention peut en outre comporter l'une ou plusieurs des caractéristiques suivantes prises isolément ou suivant toutes combinaisons techniques possibles.

Les évidements peuvent présenter, en section, une forme en « V ». Les évidements peuvent être formés par lamage des supports formant matrice.

Les éléments flexibles peuvent se présenter sous la forme de lames flexibles.

Le ou les éléments flexibles associés à un même premier sous-empilement peuvent être d'épaisseur différente de l'épaisseur du ou des éléments flexibles associés à un même deuxième sous-empilement superposé au premier sous-empilement.

En particulier, l'épaisseur des éléments flexibles peut être croissante depuis le sommet de l'empilement modulaire vers le pied de l'empilement modulaire.

Par ailleurs, les éléments flexibles et/ou les supports formant matrice et/ou les éléments d'appui peuvent être réalisés en métal, notamment en Inconel®, ou en céramique.

De plus, le nombre de sous-empilements à superposer n'est pas limité par conception. Cependant, afin de tenir compte de la hauteur acceptable du banc de conditionnement, le nombre de sous-empilements peut préférentiellement être compris entre 2 et 20.

L'empilement modulaire peut être disposé entre une plaque supérieure de répartition de charge principale et une plaque inférieure de socle.

En outre, l'enceinte thermique peut être constituée d'une sole de four, formant la paroi horizontale inférieure de l'enceinte thermique, d'une paroi horizontale supérieure et de parois latérales, définissant ensemble le volume interne.

Le système peut également comporter une canne de force pour appliquer une force de compression sur l'empilement modulaire, notamment sur une plaque supérieure de répartition de charge principale.

Par ailleurs, l'invention a encore pour objet, selon un autre de ses aspects, un procédé de serrage d'une pluralité de sous-empilements de cellules à oxydes solides de type SOEC/SOFC fonctionnant à haute température formant un empilement modulaire par le biais d'un système de conditionnement tel que défini précédemment, caractérisé en ce qu'il comporte l'étape consistant à exercer une force de compression verticale sur les sous-empilements avec une reprise d'efforts par le biais des éléments flexibles en appui sur les supports.

Le procédé peut avantageusement être mis en oeuvre sous un gaz neutre, directement à l'intérieur des sous-empilements ou par le biais de l'enceinte thermique rendue totalement inerte.

**Brève description des dessins**

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs et des cellules selon l'art antérieur,
- la figure 3 illustre le principe de l'architecture d'un dispositif sur lequel un empilement d'électrolyse à haute température (SOEC) ou de pile à combustible (SOFC) fonctionnant à haute température est placé,
- la figure 4 représente, en perspective et par observation du dessus, un exemple d'un empilement de cellules à oxydes solides de type SOEC/SOFC selon l'art antérieur avec un système de serrage de l'empilement,
- la figure 5 représente, schématiquement en coupe partielle, un exemple de système de conditionnement conforme à l'invention d'une pluralité de sous-empilements de cellules à oxydes solides de type SOEC/SOFC fonctionnant à haute température avant conditionnement du stack par pliage en V de lames métalliques, et
- la figure 6 représente, schématiquement en coupe partielle, l'exemple de système de conditionnement conforme à l'invention de la figure 5 après conditionnement du stack par pliage en V des lames métalliques.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

**Exposé détaillé de l'invention**

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau $H_2O$, de distribution et de récupération de dihydrogène $H_2$, d'oxygène $O_2$, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un sous-empilement ou empilement de type SOEC/SOFC lorsque dans sa configuration d'utilisation.

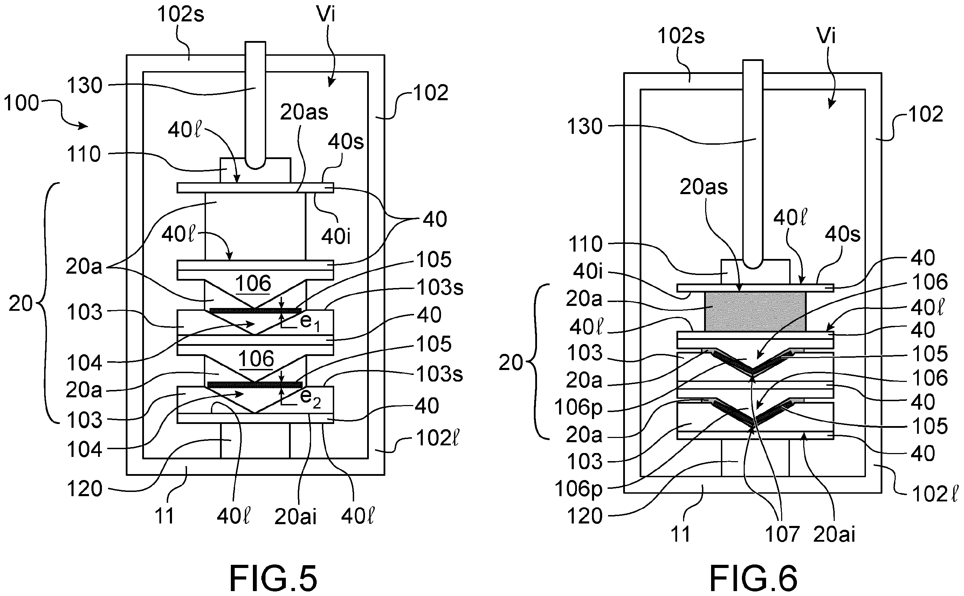

On va maintenant décrire un exemple de système de conditionnement 100 conforme à l'invention de plusieurs sous-empilements 20a de type SOEC/SOFC pour former un empilement modulaire 20 en référence aux figures 5 et 6.

On considère ici généralement le conditionnement de trois sous-empilements 20a ou sous-stacks. Toutefois, le nombre de sous-stacks 20a n'est pas limité par conception mais plutôt par le fait de devoir tenir compte de la hauteur acceptable du banc de conditionnement. Aussi, le nombre de sous-empilements 20a est préférentiellement compris entre 2 et 20.

Comme décrit précédemment dans la partie relative à l'art antérieur et au contexte technique de l'invention, chaque sous-stack 20a comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes.

Les trois sous-stacks 20a sont placés dans le volume interne Vi d'une enceinte thermique 102 du système de conditionnement 100. Cette enceinte thermique 102 est ici constituée d'une sole de four 11, tel que décrit précédemment, qui forme la paroi horizontale inférieure de l'enceinte thermique 102, et d'une paroi horizontale supérieure 102s et de parois latérales 102l, définissant ensemble le volume interne Vi, comme visible sur les figures 5 et 6.

Ainsi, les trois sous-empilements 20a sont placés dans le volume interne Vi de l'enceinte thermique 102 en étant superposés totalement les uns par rapport aux autres.

Chacun des sous-empilements 20a présente une face supérieure 20as et une face inférieure 20ai, ici de surfaces identiques.

Par ailleurs, le système 100 comporte quatre plaques terminales 40, intercalées avec les sous-stacks 20a. Plus précisément, chaque sous-stack 20a est disposé entre une plaque terminale supérieure 40 et une plaque terminale inférieure 40, une même plaque terminale 40 pouvant donc à la fois jouer le rôle de plaque terminale supérieure pour un sous-stack 20a et le rôle de plaque terminale inférieure pour un autre sous-stack 20a.

Chaque plaque terminale 40 présente une face supérieure 40s et une face inférieure 40i, ici de surfaces identiques, et dont au moins une est au contact d'un sous-stack 20a.

Par ailleurs, l'empilement ou stack modulaire 20 ainsi obtenu est disposé entre une plaque supérieure de répartition de charge principale 110 et une plaque inférieure de socle de stack 120. La plaque inférieure de socle de stack 120 est disposée sur la sole de four 11.

De plus, le système 100 comporte une canne de force 130, de forme arrondie, pour appliquer une force de compression sur l'empilement modulaire 20, en particulier sur la plaque supérieure de répartition de charge principale 110. La canne de force 130 permet notamment un appui rotulien sur la plaque de répartition de charge principale 110.

Conformément à l'invention, le conditionnement du stack modulaire 20 par assemblage de plusieurs sous-stacks 20a les uns au-dessus des autres est réalisé de manière à minimiser l'emprunte au sol du banc de conditionnement, tout en permettant d'effectuer de manière indépendante pour chaque sous-stack 20a un serrage mécanique contrôlé.

Aussi, une répartition de la charge mécanique principale est prévue entre les différents sous-stacks 20a lors de l'écrasement durant le conditionnement du stack 20 de sorte à permettre un reprise des efforts.

Précisément, la compression mécanique principale fournie par la canne de force 130 est répartie entre les sous-stacks 20a par des éléments flexibles 105 dédiés sous forme de lames métalliques, pouvant être de différentes épaisseurs e1, e2.

Ainsi, de façon avantageuse, la surface d'une face supérieure 40s d'une plaque terminale 40 est de plus grande dimension que la surface d'une face inférieure 20ai d'un sous-empilement 20a. De même, la surface d'une face inférieure 40i d'une plaque terminale 40 est de plus grande dimension que la surface d'une face supérieure 20as d'un sous-empilement 20a.

De cette façon, chaque face supérieure 40s et chaque face inférieure 40i d'une plaque terminale 40 au contact d'au moins un sous-empilement 20a présente une ou plusieurs surfaces libres 40l non superposées à un sous-empilement 20a et sans contact avec un sous-empilement 20a. Ces surfaces libres 40I sont représentées sur les figures 5 et 6. Elles correspondent ainsi aux parties dépassant latéralement d'un sous-stack 20a sur les quatre côtés de celui-ci formées sur les plaques terminales 40.

Alors, des supports formant matrice 103 sont disposés sur ces surfaces libres 40I. A noter que dans cet exemple, deux supports longs 103 peuvent être prévus par étage de sous-stack 20a, à savoir un devant et un derrière le sous-stack 20a. Dans d'autres exemples non représentés, quatre supports 103 peuvent être prévus par étage de sous-stack 20a, à savoir par exemple de chaque côté du sous-stack 20a. Les supports 103 peuvent avoir une hauteur légèrement inférieure à celle du stack après conditionnement. Les supports 103 sont avantageusement métalliques, par exemple réalisés en Inconel®.

Comme représenté sur la figure 5, chaque support formant matrice 103 comporte en outre un évidement 104 débouchant sur la face supérieure 103s du support 103 qui est opposée à la surface libre 40I. Chaque évidement 104 présente, en section, une forme en « V ».

Avantageusement encore, une pluralité d'éléments flexibles 105, ici sous forme de lames métalliques 105, est disposée au-dessus des évidements 104, en appui sur les supports formant matrice 103 au niveau des lamages 108 prévus à cet effet, de part et d'autre des évidements 104. Chaque lame métallique 105 est par exemple réalisée aussi en Inconel®. Chaque lame métallique 105 présente par exemple une longueur de l'ordre de 200 mm et une largeur de l'ordre de 10 mm.

Les lames métalliques 105 présentent avantageusement des épaisseurs e1, e2, représentées sur la figure 5, qui sont différenciées par étage. En particulier, les lames métalliques 105 ont une épaisseur croissante, comme dans cet exemple, depuis le sommet de l'empilement modulaire 20 vers le pied de l'empilement modulaire 20.

Par ailleurs, une pluralité d'éléments d'appui 106 est disposée sous les surfaces libres 40I des faces inférieures 40i des plaques terminales 40 au contact d'un sous-empilement 20a. Chaque élément d'appui 106 vient au contact d'une lame métallique 105 par son extrémité formant poinçon 106p lors du conditionnement des sous-empilements 20a. Ce contact permet alors la déformation des lames métalliques 105 qui se plient selon une forme en « V » de sorte à pénétrer dans les évidements 104.

Alors, comme représenté sur la figure 6, on obtient des espaces 107 sans contact entre les lames métalliques 105 et les supports formant matrice 103.

Autrement dit, lors du conditionnement d'un stack modulaire 20, les surfaces libres 40I sont avantageusement utilisées pour y intercaler un ensemble formé d'un support formant matrice 103 avec évidement 104, d'une lame métallique 105 et d'un élément d'appui 106 comprenant une extrémité formant poinçon 106p de sorte à compenser la force mécanique engendrée par le poids subi par chacun des sous-stacks 20a.

En pratique, cette force est en partie mais non totalement compensée par la force nécessaire au pliage en « V » des lames métalliques 105.

Ainsi, sans modification du banc de conditionnement, le système 100 permet de répartir la charge mécanique de façon uniforme entre les sous-stacks 20a composant le stack global modulaire 20 lors de son écrasement et fonctionnement.

L'ensemble comprenant le support 103, l'élément flexible 105 et l'élément d'appui 106 est avantageusement formé dans un alliage résistant aux hautes températures, notamment jusqu'à 900°C, et donc préférentiellement choisi pour être de type Inconel®. Cet ensemble est de manière avantageuse dimensionné de sorte qu'après écrasement du stack, il ne soit pas en contact sur toute la surface afin de ne pas limiter la distance d'écrasement du stack et donc d'assurer une bonne étanchéité des joints entre les cellules et l'étanchéité du stack.

Avantageusement, l'épaisseur e1, e2 d'une lame métallique 105 est obtenue grâce à l'équation d'effort de pliage en V (calcul d'effort de formage à froid), à savoir :

$$F = CRLe^2 / V,$$

dans laquelle :

F (exprimé en N) est l'effort de pliage (ici 75 N pour l'étage du milieu ou 150 N pour l'étage inférieur afin de compenser le poids subi mais sans le dépasser) ;
R (exprimée en MPa) est la résistance à la traction du métal (environ 1000 MPa maximum pour de l'Inconel®) ;
L (exprimée en mm) est la longueur pliée (ici 10 mm) ;
e (exprimée en mm) est l'épaisseur de la lame métallique ;
V (exprimée en mm) est la différence de hauteur avant et après écrasement des sous-stacks + 1 mm (soit environ 100 mm) ;
C est le coefficient égal à 1,16 (valeur utilisée lorsque V > 30*e).

Ainsi, il en résulte que les deux lames métalliques 105 (avant et arrière) de l'étage du milieu présentent une épaisseur e1 approximative de 0,8 mm et les deux lames métalliques 105 (avant et arrière) de l'étage du bas présentent une épaisseur e2 approximative de 1,14 mm.

Les extrémités des lames métalliques 105 sont positionnées de façon horizontale et répétable sur les supports formant matrice 103 grâce aux évidements 108 formés par des lamages sur les plans obliques des supports 103.

A la fin du montage du stack dans le banc de conditionnement et dès mise sous presse mécanique par la canne de force 130, les poinçons 106p sont mis en appui sur les lames métalliques 105 grâce à des vis positionnées au milieu des côtés du stack entre le poinçon 106p et la plaque terminale supérieure 40. Deux tiges de guidage installées de part et d'autre des vis peuvent permettre le maintien de la base supérieure du poinçon 106p parallèle à la plaque terminale supérieure 40. Un force de serrage identique pour chaque vis sur les lames 105 peut être assurée par l'emploi d'une clé dynamométrique.

A noter que dans la configuration de la figure 6, après écrasement, la hauteur totale du stack est réduite d'environ 40 % suite à la mise en forme des joints présents entre chaque cellule et avec les lames 105 pliées en contact partiel avec les supports formant matrice 103 pour ne pas empêcher l'écrasement du stack. La canne de force 130 aura appliqué une force constante tout au long du processus d'écrasement du stack lors de la chauffe du four.

Bien entendu, l'invention n'est pas limitée à l'exemple de réalisation qui vient d'être décrit. Diverses modifications peuvent y être apportées par l'homme du métier.

## Revendications

**1.** Système (100) de conditionnement d'une pluralité de sous-empilements (20a) de cellules à oxydes solides de type SOEC/SOFC fonctionnant à haute température formant ensemble un empilement modulaire (20) de cellules à oxydes solides de type SOEC/SOFC haute température,

chaque sous-empilement (20a) comportant une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes, **caractérisé en ce que** le système (100) comporte :

- une enceinte thermique (102) délimitant un volume interne (Vi),
- une pluralité de sous-empilements (20a) placés dans le volume interne (Vi), au moins deux sous-empilements (20a) étant superposés au moins partiellement l'un par rapport à l'autre, chaque sous-empilement (20a) présentant une face supérieure (20as) et une face inférieure (20ai),
- une pluralité de plaques terminales (40), chaque sous-empilement (20a) étant disposé entre une plaque terminale supérieure (40) et une plaque terminale inférieure (40), chaque plaque terminale (40) présentant une face supérieure (40s) et une face inférieure (40i) dont au moins une est au contact d'au moins un sous-empilement (20a), la surface d'une face supérieure (40s) d'une plaque terminale (40) étant de plus grande dimension que la surface d'une face inférieure (20ai) d'un sous-empilement (20a) et la surface d'une face inférieure (40i) d'une plaque terminale (40) étant de plus grande dimension que la surface d'une face supérieure (20as) d'un sous-empilement (20a) de sorte que chaque face supérieure (40s) et chaque face inférieure (40i) d'une plaque terminale (40) au contact d'au moins un sous-empilement (20a) présente une ou plusieurs surfaces libres (40l) non superposées à un sous-empilement (20a) et sans contact avec un sous-empilement (20a),
- une pluralité de supports formant matrice (103) disposés sur la ou les surfaces libres (40l) des faces supérieures (40s) des plaques terminales (40) au contact d'au moins un sous-empilement (20a), chaque support formant matrice (103) comportant un évidement (104) débouchant sur une face supérieure (103s) du support formant matrice (103) opposée à une surface libre (40l),
- une pluralité d'éléments flexibles (105), chacun étant disposé au-dessus d'un évidement (104) en appui sur le support formant matrice (103), de part et d'autre de l'évidement (104), et notamment positionné sur un lamage (108),
- une pluralité d'éléments d'appui (106), disposés sous la ou les surfaces libres (40l) des faces inférieures (40i) des plaques terminales (40) au contact d'au moins un sous-empilement (20a), chaque élément d'appui (106) étant apte à venir au contact d'au moins un élément flexible (105) lors du conditionnement des sous-empilements (20a) et à le déformer par pénétration dans au moins un évidement (104).

**2.** Système selon la revendication 1, **caractérisé en ce que** les évidements (104) présentent, en section, une forme en « V », étant notamment formés par lamage des supports formant matrice (103).

3. Système selon la revendication 1 ou 2, **caractérisé en ce que** les éléments flexibles (105) se présentent sous la forme de lames flexibles.

4. Système selon l'une des revendications précédentes, **caractérisé en ce que** le ou les éléments flexibles (105) associés à un même premier sous-empilement (20a) sont d'épaisseur (e1) différente de l'épaisseur (e2) du ou des éléments flexibles (105) associés à un même deuxième sous-empilement (20a) superposé au premier sous-empilement (20a).

5. Système selon la revendication 4, **caractérisé en ce que** l'épaisseur (e1, e2) des éléments flexibles (105) est croissante depuis le sommet de l'empilement modulaire (20) vers le pied de l'empilement modulaire (20).

6. Système selon l'une quelconque des revendications précédentes, **caractérisé en ce que** les éléments flexibles (105) et/ou les supports formant matrice (103) et/ou les éléments d'appui (106) sont réalisés en métal, notamment en Inconel®, ou en céramique.

7. Système selon l'une quelconque des revendications précédentes, **caractérisé en ce que** le nombre de sous-empilements (20a) est compris entre 2 et 20.

8. Système selon l'une quelconque des revendications précédentes, **caractérisé en ce que** l'empilement modulaire (20) est disposé entre une plaque supérieure de répartition de charge principale (110) et une plaque inférieure de socle (120).

9. Système selon l'une quelconque des revendications précédentes, **caractérisé en ce que** l'enceinte thermique (102) est constituée d'une sole de four (11), formant la paroi horizontale inférieure de l'enceinte thermique (102), d'une paroi horizontale supérieure (102s) et de parois latérales (102I), définissant ensemble le volume interne (Vi).

10. Système selon la revendication 9, **caractérisé en ce qu'**il comporte une canne de force (130) pour appliquer une force de compression sur l'empilement modulaire (20), notamment sur une plaque supérieure de répartition de charge principale (110).

11. Procédé de serrage d'une pluralité de sous-empilements (20a) de cellules à oxydes solides de type SOEC/SOFC fonctionnant à haute température formant un empilement modulaire (20) par le biais d'un système (100) de conditionnement selon l'une quelconque des revendications précédentes, **caractérisé en ce qu'**il comporte l'étape consistant à exercer une force de compression verticale sur les sous-empilements (20a) avec une reprise d'efforts par le biais des éléments flexibles (105) en appui sur les supports (103).

## Patentansprüche

1. System (100) zum Konditionieren einer Vielzahl von Teilstapeln (20a) von bei hohen Temperaturen arbeitenden Festoxidzellen vom Typ SOEC/SOFC, die zusammen einen Modulstapel (20) von Festoxidzellen vom Typ Hochtemperatur-SOEC/SOFC bilden,

wobei jederTeilstapel (20a) eine Vielzahl von elektrochemischen Zellen (41), die jeweils aus einer Kathode, einer Anode und einem Elektrolyten, der zwischen der Kathode und der Anode eingefügt ist, gebildet sind, und eine Vielzahl von Zwischenverbindern (42), die jeweils zwischen zwei benachbarten elektrochemischen Zellen (41) angeordnet sind, umfasst;
**dadurch gekennzeichnet, dass** das System (100) Folgendes umfassend:

- eine thermische Hülle (102), die ein Innenvolumen (Vi) begrenzt;
- eine Vielzahl von Teilstapeln (20a), die in dem Innenvolumen (Vi) platziert sind, wobei mindestens zwei Teilstapel (20a) einander mindestens teilweise überlappen, wobei jeder Teilstapel (20a) eine obere Fläche (20as) und eine untere Fläche (20ai) aufweist,
- eine Vielzahl von Endplatten (40), wobei jeder Teilstapel (20a) zwischen einer oberen Endplatte (40) und einer unteren Endplatte (40) angeordnet ist, wobei jede Endplatte (40) eine obere Fläche (40s) und eine untere Fläche (40i) aufweist, von denen mindestens eine mit mindestens einem Teilstapel (20a) in Kontakt steht, wobei die Oberfläche einer oberen Fläche (40s) einer Endplatte (40) eine größere Abmessung aufweist als die Oberfläche einer unteren Fläche (20ai) eines Teilstapels (20a) und die Oberfläche einer unteren Fläche (40i) einer Endplatte (40) eine größere Abmessung aufweist als die Oberfläche einer oberen Fläche (20as) eines Teilstapels (20a), so dass jede obere Fläche (40s) und jede untere Fläche (40i) einer Endplatte (40) in Kontakt mit mindestens einem Teilstapel (20a) eine oder mehrere freie Oberflächen (40I) aufweisen, die nicht mit einem Teilstapel (20a) überlappen und mit keinem Teilstapel (20a) in Kontakt stehen,

- eine Vielzahl von matrixbildenden Trägern (103), die auf der oder den freien Oberflächen (40I) der oberen Flächen (40s) der Endplatten (40) in Kontakt mit mindestens einem Teilstapel (20a) angeordnet sind, wobei jeder matrixbildender Träger (103) eine Aussparung (104) umfasst, die an einer oberen Fläche (103s) des matrixbildenden Trägers (103) gegenüber einer freien Oberfläche (40I) mündet,

- eine Vielzahl von flexiblen Elementen (105), wobei jedes über der Aussparung (104) in Anlage auf dem matrixbildenden Träger (103), auf jeder Seite der Aussparung (104) und insbesondere auf einer Senkung (108) positioniert angeordnet ist,

- eine Vielzahl von Anschlagelementen (106), die unterhalb der oder den freien Oberflächen (40I) der unteren Flächen (40i) der Endplatten (40) in Kontakt mit mindestens einem Teilstapel (20a) angeordnet sind, wobei jedes Anschlagelement (106) dazu ausgelegt ist, während des Konditionierens des Teilstapels (20a) mit mindestens einem flexiblen Element (105) in Kontakt zu kommen und dieses durch Eindringen in mindestens eine Aussparung (104) zu verformen.

2. System nach Anspruch 1, **dadurch gekennzeichnet, dass** die Aussparungen (104) einen V-förmigen Querschnitt aufweisen und insbesondere durch Senken des matrixbildenden Trägers (103) hergestellt werden.

3. System nach Anspruch 1 oder 2, **dadurch gekennzeichnet, dass** die flexiblen Elemente (105) in Form von flexiblen Streifen vorliegen.

4. System nach einem der vorhergehenden Ansprüche, **dadurch gekennzeichnet, dass** das oder die flexiblen Elemente (105), die demselben ersten Teilstapel (20a) zugeordnet sind, eine Dicke (e1) aufweisen, die sich von der Dicke (e2) des oder der flexiblen Elemente (105) unterscheidet, die demselben zweiten Teilstapel (20a), der auf dem ersten Teilstapel (20a) aufgeschichtet ist, zugeordnet sind.

5. System nach Anspruch 4, **dadurch gekennzeichnet, dass** die Dicke (e1, e2) der flexiblen Elemente (105) von der Oberseite des Modulstapels (20) zur Unterseite des Modulstapels (20) zunimmt.

6. System nach einem der vorhergehenden Ansprüche, **dadurch gekennzeichnet, dass** die flexiblen Element (105) und/oder die matrixbildenden Träger (103) und/oder die Anschlagelemente (106) aus Metall, insbesondere Inconel®, oder Keramik hergestellt werden.

7. System nach einem der vorhergehenden Ansprüche, **dadurch gekennzeichnet, dass** die Anzahl der Teilstapel (20a) zwischen 2 und 20 beträgt.

8. System nach einem der vorhergehenden Ansprüche, **dadurch gekennzeichnet, dass** der Modulstapel (20) zwischen einer oberen Hauptlastverteilungsplatte (110) und einer unteren Grundplatte (120) angeordnet ist.

9. System nach einem der vorhergehenden Ansprüche, **dadurch gekennzeichnet, dass** die thermische Hülle (102) aus einem Ofenboden (11), der eine untere horizontale Wand der thermischen Hülle (102) bildet, einer oberen horizontalen Wand (102s) und Seitenwände (102I) besteht, die zusammen das Innenvolumen (Vi) definieren.

10. System nach Anspruch 9, **dadurch gekennzeichnet, dass** es Kraftstäbe (130) zum Aufbringen von Druckkräften auf den Modulstapel (20), insbesondere auf die obere Hauptlastverteilungsplatte (110), umfasst.

11. Verfahren zum Einspannen einer Vielzahl von Teilstapeln (20a) von bei hohen Temperaturen arbeitenden Festoxidzellen vom Typ SOEC/SOFC, die zusammen einen Modulstapel (20) bilden, mit Hilfe eines Konditionierungssystems (100) nach einem der vorhergehenden Ansprüche, **dadurch gekennzeichnet, dass** es den Schritt umfasst, der darin besteht, eine vertikale Druckkraft auf die Teilstapel (20a) auszuüben, so dass die Kraft von den flexiblen Elementen (105), die auf den Trägern (103) aufliegen, aufgenommen wird.

**Claims**

1. System (100) for conditioning a plurality of sub-stacks (20a) of SOEC/SOFC-type solid oxide cells operating at a high temperature, jointly forming a modular stack (20) of high-temperature SOEC/SOFC-type solid oxide cells,

each sub-stack (20a) including a plurality of electrochemical cells (41) each formed of a cathode, an anode and an electrolyte inserted between the cathode and the anode, and a plurality of intermediate interconnects (42), each arranged between two adjacent electrochemical cells (41),
**characterised in that** the system (100) includes:

- a thermal enclosure (102) delimiting an internal volume (Vi),
- a plurality of sub-stacks (20a) placed in the internal volume (Vi), at least two sub-stacks (20a) being at least partially superimposed on one another, each sub-stack (20a) having an upper face (20as) and a lower face (20ai),
- a plurality of end plates (40), each sub-stack (20a) being arranged between an upper end plate (40) and a lower end plate (40), each end plate (40) having an upper face (40s) and a lower face (40i), at least one of which is in contact with at least one sub-stack (20a), the surface of an upper face (40s) of an end plate (40) being of greater dimension than the surface of a lower face (20ai) of a sub-stack (20a), and the surface of a lower face (40i) of an end plate (40) being of greater dimension than the surface of an upper face (20as) of a sub-stack (20a) such that each upper face (40s) and each lower face (40i) of an end plate (40) in contact with at least one sub-stack (20a) has one or more free surfaces (40l) which are not superimposed with a sub-stack (20a) and which are not in contact with a sub-stack (20a),
- a plurality of die-forming supports (103) arranged on the one or more free surfaces (40l) of the upper faces (40s) of the end plates (40) in contact with at least one sub-stack (20a), each die-forming support (103) including a recess (104) opening out onto an upper face (103s) of the die-forming support (103) opposite a free surface (40l),
- a plurality of flexible elements (105), each of which is arranged above a recess (104) bearing on the die-forming support (103), on either side of the recess (104), and in particular positioned on a counterbore (108),
- a plurality of bearing elements (106), arranged beneath the one or more free surfaces (40l) of the lower faces (40i) of the end plates (40) in contact with at least one sub-stack (20a), each bearing element (106) being capable of coming into contact with at least one flexible element (105) when conditioning the sub-stacks (20a) and of deforming it by penetration of at least one recess (104).

2. System according to claim 1, **characterised in that** the recesses (104) have a V-shaped cross-section and are in particular formed by counterboring the die-forming supports (103).

3. System according to claim 1 or 2, **characterised in that** the flexible elements (105) take the form of flexible strips.

4. System according to one of the preceding claims, **characterised in that** the one or more flexible elements (105) associated with the same first sub-stack (20a) have a different thickness (e1) to the thickness (e2) of the one or more flexible elements (105) associated with the same second sub-stack (20a) superimposed on the first sub-stack (20a).

5. System according to claim 4, **characterised in that** the thickness (e1, e2) of the flexible elements (105) is increasing from the top of the modular stack (20) to the bottom of the modular stack (20).

6. System according to any one of the preceding claims, **characterised in that** the flexible elements (105) and/or the die-forming supports (103) and/or the bearing elements (106) are made of metal, in particular Inconel®, or ceramic.

7. System according to any one of the preceding claims, **characterised in that** the number of sub-stacks (20a) is between 2 and 20.

8. System according to any one of the preceding claims, **characterised in that** the modular stack (20) is arranged between an upper main load distribution plate (110) and a lower base plate (120).

9. System according to any one of the preceding claims, **characterised in that** the thermal enclosure (102) consists of a furnace hearth (11), forming the lower horizontal wall of the thermal enclosure (102), an upper horizontal wall (102s) and side walls (102l), together defining the internal volume (Vi).

10. System according to claim 9, **characterised in that** it includes a force rod (130) for applying a compressive force to the modular stack (20), in particular to an upper main load distribution plate (110).

11. Method for clamping a plurality of sub-stacks (20a) of solid oxide cells of the SOEC/SOFC type operating at a high temperature, forming a modular stack (20) by means of a conditioning system (100) according to any one of the preceding claims, **characterised in that** it includes the step of exerting a vertical compression force on the sub-stacks (20a) with a force uptake through the flexible elements (105) bearing on the supports (103).

$2H_2$
$(+ H_2O)$

$2H_2O$
$(+ H_2)$

$2O^{2-}$

$O_2$
$(+ gaz\ drainant)$

(gaz drainant)

1

$4e^-$

$-$ $+$

$4e^-$

## FIG.1

Amenée courant

$H_2 + H_2O$

Motif élémentaire

5

50

$H_2O$

C2

51

5

50

$H_2O$

C1

2.2

3.2

4.2

$O_2$

2.1

## FIG.2

14

FIG.3

FIG.4

FIG.5

FIG.6

EP 4 249 640 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045215 A1
- EP 2870650 A1
- EP 3078071 A1
- EP 2900846 A1